# EUROPEAN PATENT APPLICATION

(11) **EP 4 807 834 A1**
(43) Date of publication of application: **16.09.2026**
(21) Application number: 25809860.7
(22) Date of filing: 30.04.2025
(51) Int. Cl.: H01M 10/04, H01M 50/403, B65H 19/12, B65H 19/18

(54) **DEVICE FOR SUPPLYING SEPARATOR FOR SECONDARY BATTERY, AND METHOD FOR SUPPLYING SEPARATOR FOR SECONDARY BATTERY**

(30) Priority: 10.05.2024 KR 20240061738
(71) Applicant: LG Energy Solution, Ltd., Seoul 07335 (KR)
(72) Inventor: CHOI, Hong Rak, Daejeon 34122 (KR); KIM, Yang Lae, Daejeon 34122 (KR); KIM, Jae Ha, Daejeon 34122 (KR); KIM, Eung Sang, Daejeon 34122 (KR); LEE, Han, Daejeon 34122 (KR)
(74) Representative: Goddar, Heinz J.
(86) International application number: PCT/KR2025/005867
(87) International publication number: WO 2025/234680

(57) **Abstract**

A secondary battery separator supply device related to one example of the present invention comprises a plurality of separator modules arranged to supply a separator travel path of a lamination process with separators, and a housing arranged to allow for the plurality of separator modules to be accommodated, and arranged with a guide rail connecting the separator travel path and a gateway in a direction different from the travel direction of the separator, wherein the plurality of separator modules may be mounted on the housing to move in a direction closer to or farther from the gateway along different guide rails, and may be arranged to be positioned at a supply position on the separator travel path upon a supply mode and to be positioned at a replacement position capable of being exposed to the outside of the housing upon a replacement mode.

## Description

### Technical Field

The present invention relates to a secondary battery separator supply device and a secondary battery separator supply method, and more specifically, relates to a secondary battery separator supply device and a secondary battery separator supply method, capable of replacing a separator roll whose separator is exhausted with a new separator roll during a lamination process through a plurality of separator modules arranged to be approachable to or removable from a separator travel path of a lamination process.

This application claims the benefit of priority based on Korean Patent Application No. 10-2024-0061738 dated May 10, 2024, the disclosure of which is incorporated herein by reference in its entirety.

### Background Art

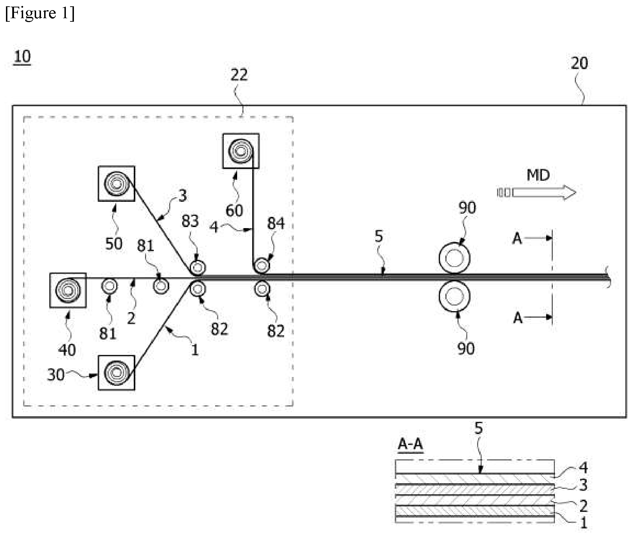

Figure 1 is a diagram for explaining a lamination facility, which schematically illustrates an operating state diagram of a lamination facility performing a lamination process.

The lamination facility (10) is a device for manufacturing a lamination assembly (5). The lamination assembly (5) is formed by sequentially laminating a lower separator (1), a negative electrode base material (2), an upper separator (3), and a positive electrode base material (4).

Referring to Figure 1, the lamination facility (10) comprises a facility body (20), a lower separator roll (30), a negative electrode roll (40), an upper separator roll (50), a positive electrode roll (60), a plurality of guide rolls (81, 82, 83, 84), and a lamination roll (90).

The lower separator roll (30), the negative electrode roll (40), the upper separator roll (50), the positive electrode roll (60), and the plurality of guide rolls (81, 82, 83, 84) are mounted in the internal space of the facility body (20).

A plurality of guide rolls (81, 82, 83, 84) is disposed to guide traveling of the negative electrode base material (2), the positive electrode base material (4), and the separator. A sliding door (22) is mounted on the facility body (20). The sliding door (22) can open and close the internal space of the facility body (20). According to facility safety regulations, the lamination facility (10) performs the lamination process in a state where the internal space of the facility body (20) is closed.

The lamination facility (10) operates to unwind the lower separator (1), the negative electrode base material (2), the upper separator (3), and the positive electrode base material (4), respectively, in a traveling direction (MD), by rotating the lower separator roll (30), the negative electrode roll (40), the upper separator roll (50), and the positive electrode roll (60) during the lamination process.

The lower separator (1) travels along a second guide roll (82) at the bottom of the negative electrode base material (2). The negative electrode base material (2) travels along a first guide roll (81). The upper separator (3) enters the upper portion of the negative electrode base material (2) along a third guide roll (83). In addition, the positive electrode base material (4) enters the upper portion of the upper separator (3) along a fourth guide roll (84). The pair of lamination rolls (90) is disposed at the rear end of the fourth guide roll (84).

The lower separator (1), the negative electrode base material (2), the upper separator (3), and the positive electrode base material (4) are guided along the traveling direction (MD) by the pair of lamination rolls (90). The pair of lamination rolls (90) rolls the lower separator (1), the negative electrode base material (2), the upper separator (3), and the positive electrode base material (4), which are during traveling, up and down, thereby bringing the lower separator (1), the negative electrode base material (2), the upper separator (3), and the positive electrode base material (4) into close contact.

Through such a process, the lower separator (1), the negative electrode base material (2), the upper separator (3), and the positive electrode base material (4) can be sequentially laminated to manufacture a lamination assembly (5).

As described above, the lamination process must be performed in a state where the internal space of the facility body (20) is closed in accordance with facility safety regulations. Accordingly, if the separators (1, 3) are exhausted during the lamination process, the lamination facility (10) must have been stopped, to replace the used separator roll with a new separator roll.

In a state where the lamination facility (10) is stopped, a worker has entered the internal space of the facility body (20) and has performed a replacement work of replacing the used separator roll with a new separator roll.

For replacement of the separator roll, the lamination process cannot be performed during the time the lamination facility (10) is stopped and restarted, whereby there is a problem that reduces a production yield of lamination assemblies (5).

### Disclosure

### Technical Problem

To solve the above problem, the present invention is intended to provide a secondary battery separator supply device and a secondary battery separator supply method, capable of replacing a separator roll whose separator is exhausted with a new separator roll during a lamination process through a plurality of separator modules arranged to be approachable to or removable from a separator travel path of a lamination process.

As the plurality of separator modules is arranged to be individually dischargeable outside a housing, it is intended to provide a secondary battery separator supply device and a secondary battery separator supply method, capable of discharging one module mounted with a separator roll in which a separator is exhausted during a lamination process to replace it with a new separator roll outside the housing.

In addition, it is intended to provide a secondary battery separator supply device capable of continuously supplying a separator through another module upon exhausting the separator in one module to improve a lamination process efficiency.

### Technical Solution

To achieve the above-described purposes, a secondary battery separator supply device related to one example of the present invention may be constituted as follows.

The secondary battery separator supply device may comprise a plurality of separator modules arranged to supply a separator travel path of a lamination process with separators, and a housing arranged to allow for the plurality of separator modules to be accommodated, and arranged with a guide rail connecting the separator travel path and a gateway in a direction different from the travel direction of the separator. At this time, the plurality of separation modules may be mounted on the housing to move in a direction closer to or farther from the gateway along different guide rails, and may be arranged to be positioned at a supply position on the separator travel path upon a supply mode and to be positioned at a replacement position capable of being exposed to the outside of the housing upon a replacement mode.

The plurality of separation modules may be arranged so that while some of the separator modules supply t the separator travel path with the separators, the separator module corresponding to the replacement mode moves to the replacement position along the guide rail, thereby allowing to be individually discharged to the outside of the housing.

The separator module may comprise a module body provided with a roll chuck in which separator rolls are detachably coupled and an auto splicing unit arranged to connect two adjacent separators, and movably mounted on the guide rail.

The separator module may comprise a module moving part providing driving force to the module body so that the module body is reciprocally movable between the supply position and the replacement position.

The module moving part may comprise a rack gear mounted on the housing parallel to the guide rail, a pinion gear mounted on the module body and gear-coupled with the rack gear, and a motor mounted on the module body and coupled to the rotational axis of the pinion gear.

In addition, the secondary battery separator supply device may comprise an operating part arranged to individually operate operation of the module moving part for each of the separator modules outside the housing.

The operating part may be arranged so that a replacement mode in which the module body moves from the supply position to the replacement position and an input mode in which the module body moves from the replacement position to the supply position are enterable.

In addition, the secondary battery separator supply device may comprise a control part arranged to individually drive the module moving part for each of the separator modules depending on the entered replacement mode and input mode.

The separator module may comprise a main module arranged to supply the separator travel path with a separator, and a spare module arranged to be capable of individual drive from the main module and to be capable of supplying the separator travel path with the separator alternately with the main module.

The control part may alternately operate the roll chuck of the main module and the roll chuck of the spare module so that the separator is continuously supplied to the separator travel path.

The control part may make the auto splicing unit of the main module and the roll chuck of the spare module standby for operation upon operation of the roll chuck of the main module.

The control part may allow the module moving part of the main module to be in a stopped state and the replacement mode of the spare module to be in a standby state upon operation of the roll chuck of the main module.

The main module and the spare module may be configured as one set, and the auto splicing unit of the main module and the auto splicing unit of the spare module may have a symmetrical structure disposed to face each other.

The separator module may be configured as one set of the main module and the spare module, and one set of the separator modules may be disposed in the lower space of the housing to supply the lower portion of the electrode base material with the separator, and another set of the separator modules may be disposed in the upper space of the housing to supply the upper portion of the electrode base material with the separator.

The housing may be arranged with a plurality of gateways arranged to face the respective separator modules, and a plurality of doors arranged to individually open and close the respective gateways.

Each door may be arranged to enable to be lock-coupled to each gateway through a locking part, and the locking part may maintain a locked state of the door in the supply mode of the separator module, and may enable to be unlocked in a replacement standby state of the separator module.

In addition, the present invention provides a secondary battery separator supply method using the secondary battery separator supply device.

A secondary battery separator supply method according to one example of the present invention may comprise a step (S1) of supplying a separator travel path of a lamination process with a separator through a main module disposed in the separator travel path, a step (S2) of connecting a separator of the main module and a separator of a spare module through an auto splicing unit of the main module if separator exhaustion of the main module is sensed, a step (S3) of continuously supplying the separator travel path with the separator through the spare module, and a step (S4) of entering a replacement mode standby state of the main module.

Also, the secondary battery separator supply method may comprise a discharge step (S5) in which the main module moves from a supply position to a replacement position to be individually discharged to the outside of the housing if a replacement mode of the main module is entered in the step S4.

In addition, the secondary battery separator supply method may comprise an input step (S6) in which, after completion of the step S5, the main module moves from the replacement position to the supply position to be accommodated in the internal space of the housing if an input mode of the main module is entered.

The discharge step and the input step of the main module may be performed while the separator is supplied to the separator travel path through the spare module.

The main module may enter a supply mode standby state at the supply position if the input step is completed.

The main module and the spare module may be arranged to alternately supply the separator travel path with the separator, and the steps S1 to S4 may be repeatedly performed through the main module and the spare module.

The main module and the spare module may be configured as one set, and in the step S1, the spare module may maintain a stopped state of a roll chuck of the spare module so as not to supply the separator travel path with the separator.

In the step S2, the auto splicing unit of the main module may connect the separator of the main module and the separator of the spare module, and cut the separator of the main module, if the separator exhaustion of the main module is sensed during operation of a roll chuck of the main module.

The supply of the separator in the step S3 and the replacement mode standby state in the step S4 may be performed simultaneously.

### Advantageous Effects

The secondary battery separator supply device having such constitutions and structures, and the secondary battery separator supply method have the following effects.

The secondary battery separator supply device is arranged so that multiple separator modules arranged to supply a separator travel path of a lamination process with separators can be individually discharged from and input to a housing.

The multiple separator modules are configured as one set of two modules, and while one module operates to supply the separator travel path with the separator, the other module is individually arranged to enable to be discharged outside the housing, so that the separator roll with the exhausted separator can be replaced with a new separator roll outside the housing.

The present invention can replace the separator roll with the exhausted separator with a new separator roll outside the housing, thereby satisfying the facility safety regulations.

In addition, through the structure capable of replacing the separator roll outside the housing, the separator can be continuously supplied to the separator travel path without stopping the facility for replacement of the separator roll in the lamination process, thereby improving the lamination process efficiency.

### Description of Drawing

Figure 1 is a diagram for explaining a conventional lamination facility, which schematically illustrates an operating state diagram of the lamination facility performing a lamination process.
Figures 2 and 3 are diagrams for explaining arrangements of a secondary battery separator supply device installed in a lamination facility, and an operation state of a secondary battery separator supply device for continuously supplying a traveling electrode base material with separators.
Figure 4 schematically illustrates a perspective diagram of a secondary battery separator supply device according to one example of the present invention.
Figure 5 is a front view of a secondary battery separator supply device according to one example of the present invention, which schematically illustrates arrangements and operation states of two separator modules configured as one set.
Figure 6(a) is an installing state diagram in which a main module is disposed in an internal space of a housing during operation, and Figure 6(b) schematically illustrates an operating state diagram in which a main module is discharged outside a housing.
Figure 7 is a diagram for explaining an operation state in which a spare module is discharged outside a housing during operation of a main module among a plurality of separator modules.
Figure 8 schematically illustrates a flow chart of a secondary battery separator supply method according to one example of the present invention.

### Mode for Invention

Hereinafter, with reference to the attached drawings, a secondary battery separator supply device and a secondary battery separator supply method, according to one example of the present invention will be described.

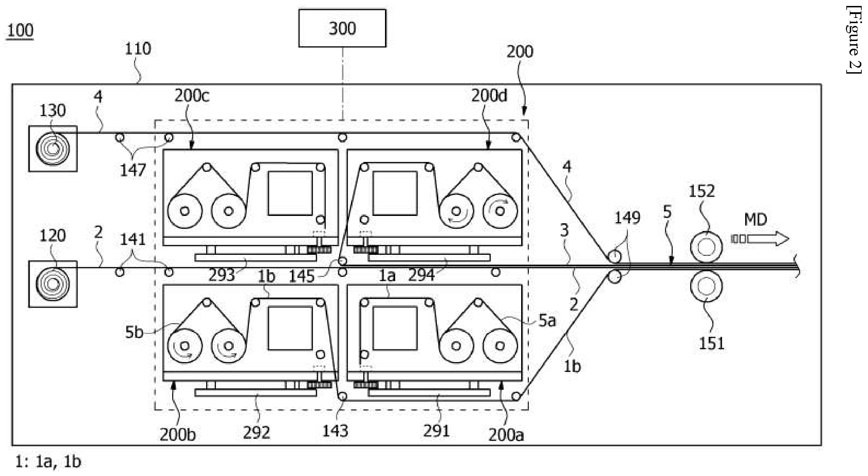

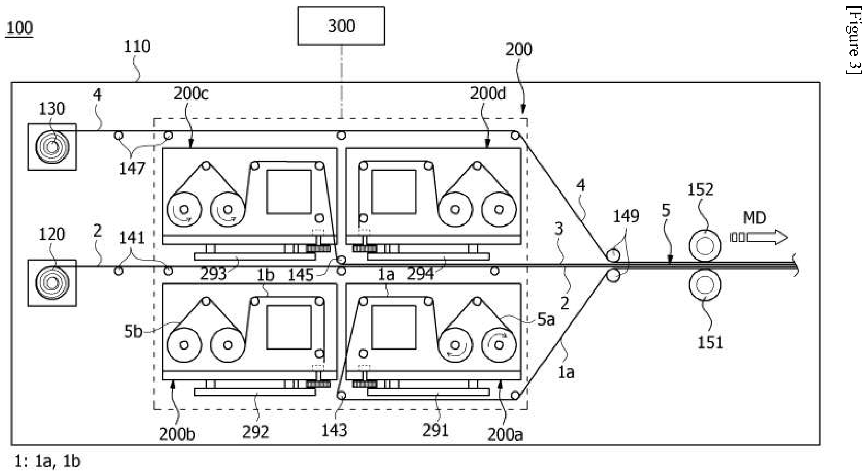

Figures 2 and 3 are diagrams for explaining arrangements of a secondary battery separator supply device installed in a lamination facility, and an operation state of a secondary battery separator supply device for continuously supplying a traveling electrode base material with separators.

Referring to Figures 2 and 3, the lamination facility (100) related to one example of the present invention comprises a secondary battery separator supply device (200).

In addition, the secondary battery separator supply device (200) is a device arranged to replace a separator roll with the exhausted separator during supply of a separator in a lamination process with a new separator roll, while satisfying facility safety regulations.

The secondary battery separator supply device (200) is one of devices constituting the lamination facility (100), which may be arranged to supply a traveling electrode base material (2, 4) with the separator (1, 3).

The lamination facility (100) must perform the lamination process in a state where external intrusion is blocked into a facility body (110) in accordance with facility safety regulations. For reference, the facility safety regulations may be IEC 60204-1, EN 1088, ANSI B11.19, and/or G-DHS-2.

IEC 60204-1 is an international standard that stipulates safety requirements for electrical equipment of machines, which is arranged to ensure safety related to electrical equipment during manufacturing and use of machines.

EN 1088 is a European standard that stipulates principles for design and selection of guard interlocking devices for machine safety, which sets forth requirements for devices interlocked with guards regardless of energy sources, and particularly, addresses specific requirements for electrical interlocking devices.

ANSI B11.19 is an American machine safety standard, which addresses performance criteria related to machine risk reduction measures, various responsibilities for machine safety, risk assessment, preventive measures, and the like.

G-DHS-2 is a standard that addresses technical specifications of DHS (Distributed Heating System) systems, which stipulates requirements related to the design, installation, operation, and maintenance of DHS systems.

The lamination facility (100) is a device that performs a lamination process for producing a lamination assembly (5, also called a laminate).

Referring to Figures 2 and 3, the lamination process is a process for manufacturing a lamination assembly (5) comprising electrode base materials (2, 4) and separators (1, 3). The electrode base materials (2, 4) comprise a negative electrode base material (2) and a positive electrode base material (4).

The lamination assembly (5) is formed by sequentially laminating a separator (1), a negative electrode base material (2), a separator (3), and a positive electrode base material (4). In the lamination process, the lamination assembly (5) may be cut to a set size of a secondary battery and manufactured into mono-cells.

In addition, the lamination facility (100) comprises a facility body (110), a negative electrode roll (120) on which a negative electrode base material (2) is wound, a positive electrode roll (130) on which a positive electrode base material (4) is wound, a plurality of guide rolls (141, 143, 145, 147, 149), and a lamination roll (151, 152).

The negative electrode roll (120), the positive electrode roll (130), the multiple guide rolls (141, 143, 145, 147, 149) and the lamination roll (151, 152) are mounted in the internal space (299) of the facility body (110).

The multiple guide rolls (141, 143, 145, 147, 149) are spaced apart from each other along a preset travel path to guide the travel of the separator (1), the negative electrode base material (2), the separator (3) and the positive electrode base material (4).

The first guide roll (141) is disposed to guide the travel of the negative electrode base material (2). The second guide roll (143) may be disposed to guide the travel of the separator (1) supplied to the lower portion of the negative electrode base material (2). The third guide roll (145) may be disposed to guide the travel of the separator (1) supplied to the upper portion of the negative electrode base material (2).

The fourth guide roll (147) may be disposed to guide the travel of the positive electrode base material (4). The separator (1), the negative electrode base material (2), the separator (3), and the positive electrode base material (4) may be combined into one while passing through the fifth guide roll (149), thereby being guided to the lamination roll (151, 152).

The lamination roll (151, 152) may pressurize and roll the separator (1), the negative electrode base material (2), the separator (3), and the positive electrode base material (4) during travel, thereby closely contacting the respective components of the lamination assembly (5).

The secondary battery separator supply device (200) according to one example of the present invention may be disposed in a section between the negative electrode roll (120) and the lamination roll (151, 152) in the lamination facility (100).

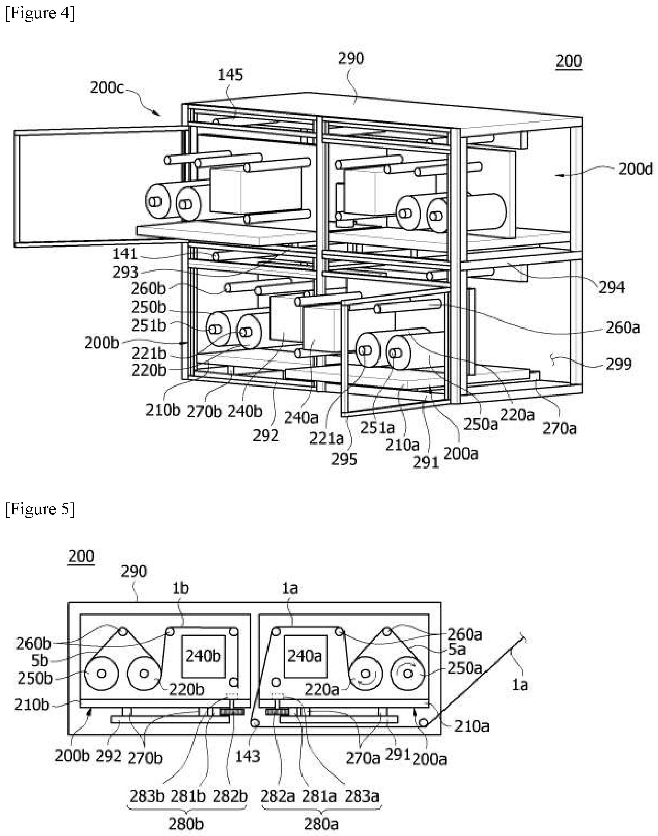

Hereinafter, with reference to Figures 4 to 7, the constitutions and operation methods of the secondary battery separator supply device (200) will be described.

Figure 4 is a perspective diagram of a secondary battery separator supply device according to one example of the present invention, and Figure 5 is a front view of a secondary battery separator supply device according to one example of the present invention, which schematically illustrates arrangements and operation states of two separator modules configured as one set.

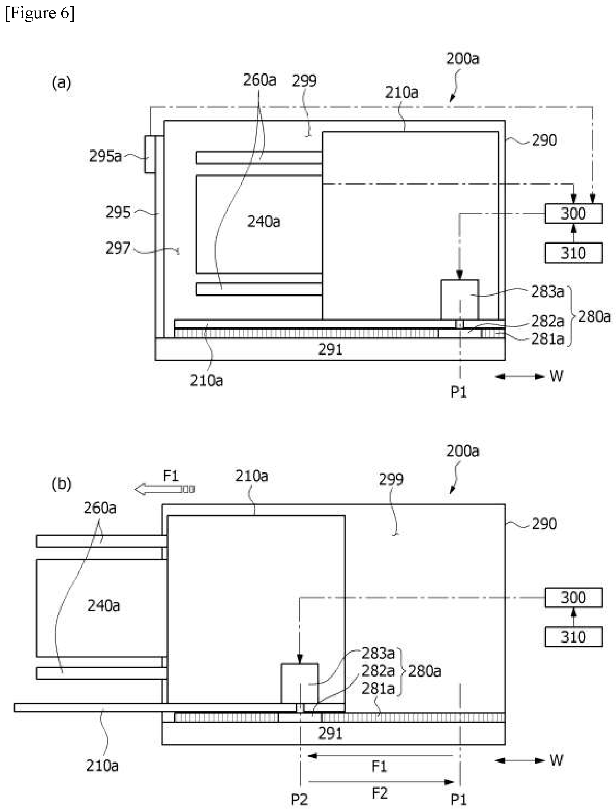

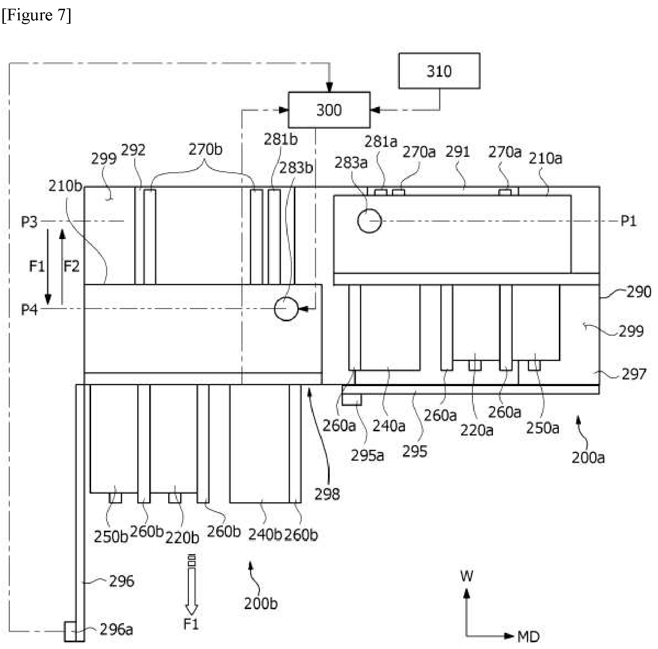

In addition, Figure 6(a) is an installing state diagram in which a main module is disposed in an internal space of a housing during operation, and Figure 6(b) schematically illustrates an operating state diagram in which a main module is discharged outside a housing, and Figure 7 is a diagram for explaining an operation state in which a spare module is discharged outside a housing during operation of a main module among a plurality of separator modules.

Referring to Figures 4 and 5, the secondary battery separator supply device (200) comprises a plurality of separator modules (200a, 200b) arranged to supply a separator travel path of a lamination process with separators. In addition, the secondary battery separator supply device (200) may comprise a housing (290) arranged so that the plurality of separator modules (200a, 200b) is accommodated, and arranged with a plurality of guide rails (270a, 270b) connecting the separator travel path and the gateway in a direction (W) different from the travel direction (MD) of the separator.

The multiple separator modules (200a, 200b) are separator supply modules arranged to supply the separator travel path of the lamination process with separators, which are mounted in the housing (290) to be approachable to and removable from the separator travel path of the housing (290).

The multiple separator modules (200a, 200b) may be mounted in the housing (290) to move in a direction closer to or farther from the gateway along different guide rails (270a, 270b).

The guide rails (270a, 270b) may be mounted on supports (291, 292) of the housing (290) parallel to a direction (W) different from the travel direction (MD) of the separator (1). Hereinafter, for convenience of explanation, the direction (W) different from the travel direction (MD) of the separator (1) is referred to as an "entry and exit direction (W)". The entry and exit direction (W) is parallel to the width direction of the separator (1). The entry and exit direction (W) may be a direction orthogonal to the travel direction (MD).

Each of the separator modules (200a, 200b) may be mounted in the housing (290) to be movable back and forth between a supply position (P1, P3) and a replacement position (P2, P4) along each of the guide rails (270a, 270b) in a direction (W) different from the travel direction (MD) of the separator (1).

The plurality of separator modules (200a, 200b) may be positioned at the supply position (P1, P3) on the separator travel path upon a supply mode. The plurality of separator modules (200a, 200b) may be arranged to be positioned at the replacement position (P2, P4) capable of exposure to the outside of the housing (290) upon a replacement mode.

Referring to Figure 5, the plurality of separator modules (200a, 200b) may comprise a main module (200a) and a spare module (200b). The main module (200a) and the spare module (200b) may be configured as one set.

The main module (200a) and the spare module (200b) are arranged to be individually drivable. The main module (200a) and the spare module (200b) may be arranged to alternately supply the separator travel path with the separator (1: 1a, 1b).

Referring to Figure 6, the main module (200a) is movably mounted on the first guide rail (270a). The main module (200a) may be mounted on the housing (290) to be positioned at a first supply position (P1) of the separator travel path upon the supply mode and at a first replacement position (P2) upon the replacement mode.

Referring to Figure 7, the spare module (200b) is movably mounted on the second guide rail (270b). The spare module (200b) may be mounted on the housing (290) to be positioned at a second supply position (P3) of the separator travel path upon the supply mode and at a second replacement position (P4) upon the replacement mode.

In addition, the first supply position (P1) and the second supply position (P3) may be positioned on the same virtual line, and the first replacement position (P2) and the second replacement position (P4) may be positioned on the same virtual line.

Referring to Figure 6, the first supply position (P1) and the first replacement position (P2) are different points on the first guide rail (270a). The first replacement position (P2) is a position where the main module (200a) can be exposed to the outside of the housing (290) through a first gateway (297).

Referring to Figure 7, the second supply position (P3) and the second replacement position (P4) are different points on the second guide rail (270b). The second replacement position (P4) is a position where the spare module (200b) can be exposed to the outside of the housing (290) through a second gateway (298).

The first supply position (P1) and the second supply position (P3) are different points on the separator travel path. The first replacement position (P2) and the second replacement position (P4) are positions that are separated from the separator travel path, which are positions adjacent to the respective gateways (297, 298).

The main module (200a) and the spare module (200b) are configured as one set, where a first auto splicing unit (240a) of the main module (200a) and a second auto splicing unit (240b) of the spare module (200b) may have a symmetrical structure disposed to face each other. The main module (200a) and the spare module (200b) may be arranged to be individually operable.

Hereinafter, to avoid repetition of explanation, components of the main module (200a) will be mainly described.

Referring to Figures 4 and 5, the main module (200a) comprises a first module body (210a), a first roll chuck (221a) on which a first separator roll (220a) is mounted, a first auto splicing unit (240a), a first film roll (250a), a plurality of first rolls (260a), and a first module moving part (280a).

The first module body (210a) is mounted with a first roll chuck (221a), a first auto splicing unit (240a), a first film chuck (251a), and a plurality of first rolls (260a). The first roll chuck (221a), the first auto splicing unit (240a), the first film chuck (251a), and the plurality of first rolls (260a) are arranged to be movable together with the first module body (210a).

The first separator roll (220a) may be detachably mounted on the first roll chuck (221a). The first roll chuck (221a) rotatably supports the first separator roll (220a). The first separator roll (220a) may be rotated in the rotational direction of the first roll chuck (221a).

Meanwhile, on the first separator roll (220a), a first separator (1a) and a protective film for protecting the first separator (1a) are wound together. Therefore, when the first separator (1a) is supplied, the protective film must be separated from the first separator (1a).

The first film roll (250a) may be detachably mounted on the first film chuck (251a). The first film chuck (251a) rotatably supports the first film roll (250a). The first film chuck (251a) may be rotated in the opposite direction to the rotation direction of the first roll chuck (221a). The first film roll (250) is wound by separating the protective film of the first separator roll (220a) when the first separator roll (220a) is unwound. Through such a structure, only the first separator (1a) may be supplied to the lamination process from the first separator roll (220a).

The plurality of first rolls (260a) may be mounted on the first module body (210a) so that they enable to rotate idly upon travel of the first separator (1a). The plurality of first rolls (260a) may be mounted on the first module body (210a) so that the first separator (1a) travels around the first auto splicing unit (240a).

The first auto splicing unit (240a) can connect the traveling first separator (1a) and the standby second separator (1b), and cut the first separator (1a), if the exhaustion of the first separator (1a) of the first separator roll (220a) is sensed. The first separator (1a) and the second separator (1b) may be connected by an adhesive method.

If the first auto splicing unit (240a) senses the exhaustion of the first separator (1a) in the first separator roll (220a), it may provide exhaustion information of the first separator roll (220a) to the control part (300).

The first module body (210a) is arranged to be movable between the first supply position (P1) and the first replacement position (P2) along the first guide rail (270A) through the first module moving part (280a). The first guide rail (270a) may be mounted on the first support (291) of the housing (290).

At the first replacement position (P2), the first module body (210a), the first separator roll (220a), and the first film roll (250a) may be exposed to the outside of the housing (290) through the first gateway (297).

The first module moving part (280a) is coupled to the first module body (210a) and arranged to provide driving force to the first module body (210a).

The first module moving part (280a) comprises a first rack gear (281a), a first pinion gear (282a), and a first motor (283a). The first rack gear (281a) may be mounted on the first support (291) of the housing (290) parallel to the first guide rail (270a).

The first pinion gear (282a) may be mounted on the first module body (210a) and may be gear-coupled with the first rack gear (281a). The first motor (283a) may be mounted on the first pinion gear (282a).

The first motor (283a) may be coupled with the rotational axis of the first pinion gear (282a). The first motor (283a) may be coupled to the first module body (210a).

The first module drive part (280a) may be operated according to the replacement mode and the input mode entered through the operating part (310) mounted on the outside of the housing (290).

The spare module (200b) has the same constitution and operation method as the main module (200a). The main module (200a) and the spare module (200b) have the same components except that the names of the components are distinguished as "first" and "second" according to the supply order of the separators (1).

The spare module (200b) may be disposed in a row with the main module (200a) in the internal space (299) of the housing (290).

The spare module (200b) comprises a second module body (210b), a second roll chuck (221b) on which a second separator roll (220b) is mounted, a second auto splicing unit (240b), a second film roll (250b), a plurality of second rolls (260b), and a second module moving part (280b).

The second module body (210b) may be movably mounted on a second guide rail (270b) mounted on a second support (292) of the housing (290). The second guide rail (270b) may be arranged to guide the second module body (210b) to the second gateway (no reference numeral indicated).

The second module moving part (280b) may be mounted on the second module body (210b). The second module moving part (280b) has the same structure as the first module moving part (280a).

The second module moving part (280b) comprises a second rack gear (281b) mounted on the second support (292) parallel to the second guide rail (270b), a second pinion gear (282b) gear-coupled to the second rack gear (281b) and mounted on the second module body (210b), and a second motor (283b) providing rotational force to the second pinion gear (282b).

The second motor (283b) may be operated according to the replacement mode and the input mode of the spare module (200b) entered through the operating part (310). The standby, operation, and replacement of the spare module (200b) may be performed in the same manner as the standby, operation, and replacement of the main module (200a) as described above.

The secondary battery separator supply device (200) can individually discharge only modules on which the separator roll with the exhausted separator is mounted during the supply of the separators in such a manner to the outside of the housing (290), thereby continuously supplying the separator travel path with separators.

The two separator modules (200a and 200b, and 200c and 200d) configured as each set are identical in terms of constitutions, structures, and operation methods, except for the different installation locations.

Referring to Figures 2 and 4, the separator modules (200a, 200b) configured as one set may be individually mounted on the first support (291) and the second support (292) of the housing (290) to supply the lower portion of the negative electrode base material (2) with the separators (1: 1a, 1b) in the lower space of the housing (290).

Referring to Figures 2 and 4, the separator modules (200c, 200d) configured as another set may be individually mounted on the third support (293) and the fourth support (294) of the housing (290) to supply the upper portion of the cathode substrate (2) with the separator (3).

The separator modules (200c, 200d) may be disposed in the upper space of the housing. The separator modules (200c, 200d) have the same constitution, structure, and operating method as the two separator modules (200a, 200b) as described above.

The control part (300) may alternately operate the first roll chuck (221a) of the main module (200a) and the second roll chuck (221b) of the spare module (200b) so that the separators (1: 1a, 1b) are continuously supplied to the separator travel path.

The control part (300) may make the first auto splicing unit (240a) of the main module (200a) and the second roll chuck (221b) of the spare module (200b) standby for operation upon operation of the first roll chuck (221a) of the main module (200a).

In addition, the control part (300) may allow the first module moving part (280a) of the main module (200a) to be a stopped state and the replacement mode of the second module moving part (280b) in the spare module (200b) to be in a standby state upon operation of the first roll chuck (221a) of the main module (200a).

When the control part (300) receives exhaustion information from the first auto splicing unit (240a) during operation of the first roll chuck (221a), it may provide an alarm for notifying the exhaustion of the separator to the outside. A worker may recognize whether the separator is exhausted through the alarm.

The control part (300) is arranged to individually drive the module moving parts (280a, 280b) of the respective separator modules (200a, 200b) according to the replacement mode and the input mode entered through the operating part (310).

The operating part (310) may be arranged with an operation button capable of operating the replacement mode and the input mode of the main module (200a) and the spare module (200b). The operating part (310) may be arranged with an operation button capable of operating a locking mode and an unlocking mode of each locking part (295a, 296a).

The worker may operate motion of the first module moving part (280a) and the first locking part (295a) through the operating part (310) from the outside of the housing (290). When the locking mode of the first locking part (295a) is released, the first door (295) may open the first gateway (297).

If the replacement mode of the main module (200a) is entered through the operating part (310), the control part (300) may operate the first motor (283a) so that the first module body (210a) moves from the first supply position (P1) to the first replacement position (P2). The replacement mode of the main module (200a) may be performed while the spare module (200b) supplies the separator travel path with the second separator (1b).

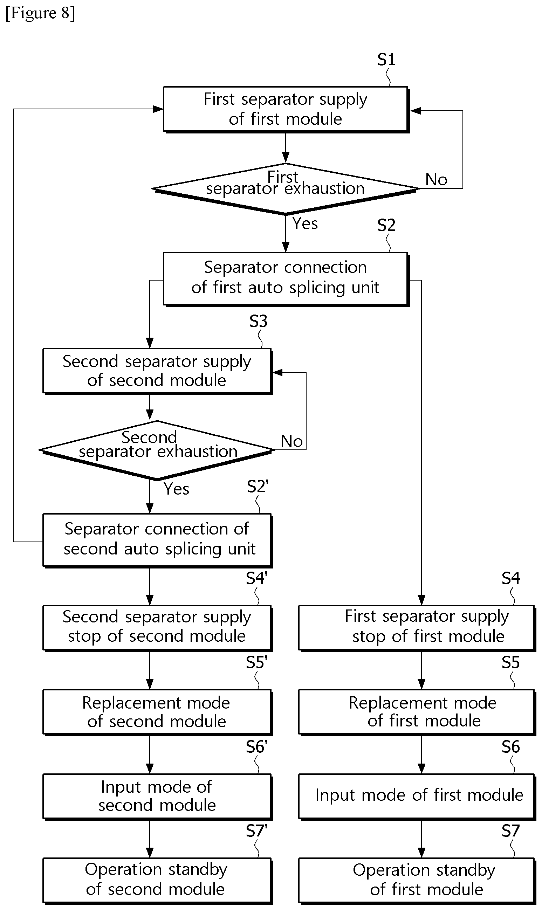

The main module (200a) may be moved from the first supply position (P1) to the first replacement position (P2) along the first guide rail (270a) and discharged to the outside of the housing (290) through the first gateway (297). Referring to Figure 6(b), upon driving of the first motor (283a), the first pinion gear (282a) may be operated to push the first module body (210a) in a first entry and exit direction (F1) while rotating along the first rack gear (281a). The first module body (210a) may be discharged to the outside of the housing (290) through the first gateway (297) (see Figure 8, S5).

At the first replacement position (P2), the first separator roll (220a), the first film roll (250a), and the first auto splicing unit (240a) are exposed to the outside of the housing (290) in a state where they are mounted on the first module body (210a). The first separator roll (220a) may be discharged to the outside of the housing (290) in a state where it is mounted on the first roll chuck (221a). At this time, the worker may replace the first separator roll (220a) of the main module (200a).

When the input mode of the main module (200a) is entered through the operating part (310), the control part (300) may operate the first motor (283a) so that the first module body (210a) moves from the first replacement position (P2) to the first supply position (P1).

Upon the input mode of the main module (200a), the first motor (283a) may be operated to push the first module body (210a) in a second entry and exit direction (F2) while the first pinion gear (282a) rotates along the first rack gear (281a). The second entry and exit direction (F2) is the opposite direction to the first entry and exit direction (F1).

After the input mode of the main module (200a) is completed, the main module (200a) is positioned at the first supply position (P1). Then, the first door (295) is lock-coupled to the first gateway (297) through the first locking part (295a).

When the replacement mode of the spare module (200b) is entered through the operating part (310), the control part (300) may operate the second module moving part (280b). The replacement mode of the spare module (200b) may be performed while the main module (200a) supplies the separator travel path with the first separator (1a). At this time, the worker may replace the second separator roll (220b) of the spare module (200b).

Referring to Figure 7, upon the replacement mode of the spare module (200b), the second module body (210b) moves from the second supply position (P3) to the second replacement position (P4) along the second guide rail (270b) through the second module moving part (280b).

At the second replacement position (P4), the second roll chuck (221b) of the second module body (210b) may be exposed to the outside of the housing (290) through the second gateway (no reference numeral indicated). The second separator roll (220b) may be discharged to the outside of the housing (290) in a state where it is mounted on the second roll chuck (221b). At this time, the worker may replace it with a new second separator.

If the input mode of the spare module (200b) is entered through the operating part (310), the control part (300) may operate the second module moving part (280b) so that the second module body (210b) moves from the second replacement position (P4) to the second supply position (P3).

Hereinafter, with reference to Figure 8, a secondary battery separator supply method for continuously supplying a lamination process with separators will be described. The secondary battery separator supply method may use the above-described secondary battery separator supply device (200).

Figure 8 schematically illustrates a flow chart of a secondary battery separator supply method according to one example of the present invention.

The secondary battery separator supply method may comprise a step (S1) of supplying a separator travel path of a lamination process with a separator through a main module (200a) disposed in the separator travel path, a step (S2) of connecting a separator of the main module (200a) and a separator of a spare module (200b) through a first auto splicing unit (240a) of the main module (200a) if separator exhaustion of the main module (200a) is sensed, a step (S3) of continuously supplying the separator travel path with the separator through the spare module (200b), and a step (S4) of entering a replacement mode standby state of the main module (200a).

As described above, the main module (200a) and the spare module (200b) are configured as one set, and arranged to alternately supply the separator travel path with the separators (1: 1a, 1b).

In the step S1, the first roll chuck (221a) of the main module (200a) is operated to unwind the first separator (1a) from the first separator roll (220a). Referring to Figure 6, the first separator (1a) may be supplied to the lower portion of the negative electrode base material (2) traveling along the traveling path of the separator.

Upon operation of the first roll chuck (221a), the first film chuck (251a) is also operated together. The first film chuck (251a) may unwind the first film (5a) separated from the first separator (1a) while rotating in the opposite direction to the first roll chuck (221a).

The first separator (1a) may be unwound from the first separator roll (220a) and guided to the second guide roll (143) along the plurality of first rolls (260a). The first separator (1a) may be supplied to the lower portion of the electrode base material (e.g., negative electrode base material (2)) via the second guide roll (143). The second guide roll (143) may be disposed in a space between the first module body (210a) and the second module body (210b).

In the step S1, the spare module (200b) may maintain the stopped state of the second roll chuck (221b) of the spare module (200b) so as not to supply the separator travel path with the separator.

In the step S2, if the separator exhaustion of the main module (200a) is sensed during the operation of the first roll chuck (221a) of the main module (200a), the first auto splicing unit (240a) of the main module (200a) may connect the first separator (1a) of the main module (200a) and the second separator (1b) of the spare module (200b), and cut the first separator (1a) of the main module (200a) from the first separator roll (220a).

In the step S3, the second roll chuck (221b) and the second film chuck (251b) of the spare module (200b) are operated. Referring to Figure 7, the second roll chuck (221b) is operated to supply the separator travel path with the second separator (1b) of the second separator roll (220b). The second film chuck (251b) may wind the second film (5b) separated from the second separator (1b) while rotating in the opposite direction to the second roll chuck (221b).

While the spare module (200b) supplies the separator travel path with the second separator (1b) at the second supply position (P3), the main module (200a) enters the replacement mode standby state at the first supply position (P1). In the replacement mode, the main module (200a) maintains the stopped state of the first roll chuck (221a) and the first film chuck (251a).

The secondary battery separator supply device (200) may continuously supply the separator (1) during the lamination process by connecting the second separator (1b) to the first separator (1a).

The steps S1 to S4 may be repeatedly performed through the main module (200a) and the spare module (200b). The supply of the separator in the step S3 and the standby state of the replacement mode in the step S4 may be performed simultaneously.

If the replacement mode of the main module (200a) is entered in the step S4, referring to Figure 4, the main module (200a) may move from the first supply position (P1) to the first replacement position (P2) in a state where the first roll chuck (221a) of the main module (200a) is stopped, thereby being individually discharged to the outside of the housing (290) (S5).

The worker may replace the first separator roll (220a) in which the first separator (1a) is exhausted with a new separator roll outside the housing (290). The worker may replace the first film roll (250a) on which the first film (5a) is wound with a new film roll.

After the completion of the step S5, if the input mode of the main module (200a) is entered, the main module (200a) may be moved from the first replacement position (P2) to the first supply position (P1) in a state where the new separator roll and the new film roll are mounted thereon, and accommodated in the internal space (299) of the housing (290) (S6).

The replacement mode and the input mode of the main module (200a) may be performed in an unlocked state of the first locking part (295a). The discharge (S5) and input (S6) of the main module (200a) may be performed even while the second separator (1b) of the spare module (200b) is supplied to the separator travel path.

Referring to Figure 3, while the spare module (200b) supplies the second separator (2b) at the second supply location (P3), the main module (200a) may enter a supply mode standby state to enable to be connected to the second separator (1b) of the spare module (200b) at the first supply location (P1) (S7).

While the spare module (200b) is in operation, if the second auto splicing unit (240b) senses the exhaustion of the second separator (1b) in the second separator roll (220b), it may connect the second separator (1b) unwound from the second separator roll (220b) and the first separator (1a) of the main module (200a) in standby, and cut the second separator (1b) (S2').

The first roll chuck (221a) of the main module (200a) may be operated to supply the separator travel path (S1) with the first separator (1a).

The spare module (200b) enters the replacement mode standby state (S4'). If the replacement mode of the spare module (200b) is entered to the control part (300) through the operating part (310), the second motor (283b) operates to push the second module body (210b) from the second supply position (P3) to the second replacement position (P4) (S5').

Referring to Figure 7, at the second replacement position (P4), the second separator roll (220b), the second film roll (250b), and the second auto splicing unit (240b) may be exposed to the outside of the housing (290) together with the second module body (210b).

The worker may replace the second separator roll (220b), in which the separator is exhausted, with a new separator roll outside the housing (290). In addition, the worker may replace the second film roll (250b), in which the second film (5b) is wound, with a new film roll outside the housing (290). The replacement of the spare module (200b) may be performed while the main module (200a) is in operation.

If the input mode of the spare module (200b) is entered to the control part (300) through the operating part (310), the second motor (283b) operates to push the second module body (210b) from the second replacement position (P4) to the second supply position (P3) (S6').

At the second supply position (P3), the second separator roll (220b) mounted on the second module body (210b) is disposed on the separator travel path. The spare module (200b) may enter a supply mode standby state to enable to be connected to the first separator (1a) of the main module (200a) at the second supply location (P3) (S7').

The present invention can replace a separator roll whose separator has been exhausted with a new separator roll outside the housing (290), thereby complying with the facility safety regulations.

The secondary battery separator supply device (200) can improve the productivity of the lamination assembly by saving the time required for the process of replacing a separator roll whose separator has been exhausted according to the exhaustion of the separator (1), with a new separator roll.

The secondary battery separator supply device (100) can improve the efficiency of the lamination process by replacing a separator roll whose separator has been exhausted with a new separator roll without stopping the facility.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a secondary battery separator supply device and a secondary battery separator supply method related to one example of the present invention, multiple separator modules arranged to supply a separator travel path of a lamination process with separators are arranged to enable to be individually discharged and input in a housing.

## Claims

1. A secondary battery separator supply device comprising:
a plurality of separator modules arranged to supply a separator travel path of a lamination process with separators; and
a housing arranged to allow for the plurality of separator modules to be accommodated, and arranged with a guide rail connecting the separator travel path and a gateway in a direction different from the travel direction of the separator, wherein
the plurality of separation modules is mounted on the housing to move in a direction closer to or farther from the gateway along different guide rails, and arranged to be positioned at a supply position on the separator travel path upon a supply mode and to be positioned at a replacement position capable of being exposed to the outside of the housing upon a replacement mode.

2. The secondary battery separator supply device according to claim 1, wherein
the plurality of separation modules is arranged so that
while some of the separator modules supply the separator travel path with the separators,
the separator module corresponding to the replacement mode moves to the replacement position along the guide rail, thereby allowing to be individually discharged to the outside of the housing.

3. The secondary battery separator supply device according to claim 1, wherein
the separator module further comprises a module body provided with a roll chuck in which separator rolls are detachably coupled and an auto splicing unit arranged to connect two adjacent separators, and movably mounted on the guide rail; and
a module moving part providing driving force to the module body so that the module body is reciprocally movable between the supply position and the replacement position.

4. The secondary battery separator supply device according to claim 3, wherein
the module moving part comprises:
a rack gear mounted on the housing parallel to the guide rail;
a pinion gear mounted on the module body and gear-coupled with the rack gear; and
a motor mounted on the module body and coupled to the rotational axis of the pinion gear.

5. The secondary battery separator supply device according to claim 3, further comprising
an operating part arranged to individually operate operation of the module moving part for each of the separator modules outside the housing, wherein
the operating part is arranged so that a replacement mode in which the module body moves from the supply position to the replacement position and an input mode in which the module body moves from the replacement position to the supply position are enterable.

6. The secondary battery separator supply device according to claim 5, further comprising
a control part arranged to individually drive the module moving part for each of the separator modules depending on the entered replacement mode and input mode.

7. The secondary battery separator supply device according to claim 6, wherein
the separator module comprises:
a main module arranged to supply the separator travel path with a separator; and
a spare module arranged to be capable of individual drive from the main module and to be capable of supplying the separator travel path with the separator alternately with the main module.

8. The secondary battery separator supply device according to claim 7, wherein
the control part alternately operates the roll chuck of the main module and the roll chuck of the spare module so that the separator is continuously supplied to the separator travel path.

9. The secondary battery separator supply device according to claim 8, **characterized in that**
the control part makes the auto splicing unit of the main module and the roll chuck of the spare module standby for operation upon operation of the roll chuck of the main module.

10. The secondary battery separator supply device according to claim 9, **characterized in that**
the control part allows the module moving part of the main module to be in a stopped state and the replacement mode of the spare module to be in a standby state upon operation of the roll chuck of the main module.

11. The secondary battery separator supply device according to claim 7, wherein
the main module and the spare module are configured as one set, and the auto splicing unit of the main module and the auto splicing unit of the spare module have a symmetrical structure disposed to face each other.

12. The secondary battery separator supply device according to claim 7, **characterized in that**
the separator module is configured as one set of the main module and the spare module, and
one set of the separator modules is disposed in the lower space of the housing to supply the lower portion of the electrode base material with the separator, and
another set of the separator modules is disposed in the upper space of the housing to supply the upper portion of the electrode base material with the separator.

13. The secondary battery separator supply device according to claim 1, **characterized in that**
the housing is arranged with a plurality of gateways arranged to face the respective separator modules, and a plurality of doors arranged to individually open and close the respective gateways, and
each door is arranged to enable to be lock-coupled to each gateway through a locking part, and
the locking part maintains a locked state of the door in the supply mode of the separator module, and enables to be unlocked in a replacement standby state of the separator module.

14. A secondary battery separator supply method comprising:
(S1) a step of supplying a separator travel path of a lamination process with a separator through a main module arranged in the separator travel path;
(2) a step of connecting a separator of the main module and a separator of a spare module through an auto splicing unit of the main module if separator exhaustion of the main module is sensed;
(S3) a step of continuously supplying the separator travel path with the separator through the spare module;
(S4) a step of entering a replacement mode standby state of the main module; and
(S5) a discharge step in which the main module moves from a supply position to a replacement position to be individually discharged to the outside of the housing if a replacement mode of the main module is entered in the step S4.

15. The secondary battery separator supply method according to claim 14, further comprising
an input step (S6) in which, after completion of the step S5, the main module moves from the replacement position to the supply position to be accommodated in the internal space of the housing if an input mode of the main module is entered.
